# EUROPEAN PATENT SPECIFICATION

(11) **EP 3 669 635 B1**
(45) Date of publication and mention of the grant of the patent: **10.08.2022**
(21) Application number: 18213654.9
(22) Date of filing: 18.12.2018
(51) Int. Cl.: A01D 57/03

(54) **COMBINE HEADER WITH ADJUSTABLE REEL**
MÄHDRESCHERSCHNEIDWERK MIT EINSTELLBARER HASPEL
TÊTE DE COUPE DE MOISSONNEUSE-BATTEUSE À RABATTEUR RÉGLABLE

(43) Date of publication of application: 24.06.2020
(73) Proprietor: CNH Industrial Belgium NV, 8210 Zedelgem (BE)
(72) Inventor: Tack, Johan, 8720 Dentergem-Oeselgem (BE); De Fraine, Jonathan, 9810 Nazareth (BE)
(74) Representative: CNH Industrial IP Department

(56) References cited:
- US-A- 3 400 526
- US-A- 3 664 101
- US-A1- 2004 139 715

## Description

### Field of the Invention

The present invention is related to a grain header for a combine harvester, in particular to a reel mechanism mounted on the combine header. The invention is equally related to combine harvesters equipped with the header.

### State of the art.

A grain header for a combine harvester is usually fitted with a rotating reel at the front, for ensuring that stalks are in an upright position when they are cut by the knives at the bottom of the header. When harvesting stalks which have fallen down on the field, a problem occurs when the driving direction of the harvester is parallel to the orientation of the fallen stalks. In this situation, the stalks are not lifted but pushed further downward by the knives, while the tines that are mounted on the reel just pass through the stalks without lifting them. The driver is then forced to change the harvesting direction, which may lead to inefficient harvesting and loss of time.

US2004/139715 A1 discloses a pickup reel for a harvesting machine comprising a reel support and a first shaft rotatably supported by the reel support and extending along an axis transverse to the frame. A cam is supported by the reel support and defines a generally endless cam path extending about the first shaft. An arm extends radially from the first shaft and is rotatable with the first shaft. A second shaft is connected to the arm and supports a first tine and a second tine located on opposite axial sides of the cam. A cam follower is engageable with the cam and movable along the cam path. A crank arm assembly is connected between the cam follower and the second shaft. The rotation of the first shaft and movement of the cam follower along the cam path cooperate to cause the tips to move along the tip path.

US3400526 A discloses harvester reel for use in conjunction with a cutter bar; to provide such a reel which will laterally condense the crop as it moves it rearwardly; to provide such a construction which is durable and dependable in use.

US3664101 A discloses a crop gathering and converging reel has two reel sections rotatably mounted on a transverse stationary tube with adjacent ends of the reel sections overlapping. The two reel sections have opposite angularities to sweep cut crop rearwardly into the header and laterally towards the center for converging the cut crop to a narrower discharge.

### Summary of the invention

The invention is related to a combine header and to a combine harvester as described in the appended claims. The reel of the combine header comprises a rotatable central tube with side members attached to the tube and with intermediate members arranged between the side members and tine bars coupled to the side and intermediate members. The intermediate members are coupled to a pivoting mechanism for positioning these intermediate members at a slanted angle with respect to the central tube, the slanted position of the intermediate members being stationary relative to the frame of the header while the reel is rotating. The tine bars are pivotably connected to the intermediate members, so that the rotation of the reel generates a reciprocating motion of the tine bars in the axial direction of the reel when the intermediate members are in a slanted position. This in turn generates a sideways motion of the tines attached to the tine bars. The sideways motion enables the lifting up of fallen crops lying parallel to the driving direction of the harvester.

### Brief description of the figures

Figure 1 is a view of a header for a combine harvester, as presently known in the art.
Figure 2a shows a front view of a reel provided in a header according to an embodiment of the invention. Figures 2b and 2c show top and side views of the driving mechanism for positioning the intermediate members of the reel at a slanted angle. Figure 2d is a detailed section view of the manner in which the tine bars are connected to the intermediate members of the reel, according to a preferred embodiment.
Figure 3a shows again the front view of the reel, with the intermediate members positioned at a slanted angle. Figure 3b is an enlarged view of the left-hand portion of Fig. 3a.
Figure 4 illustrates a specific embodiment of a header according to the invention.
Figure 5 illustrates an embodiment wherein the retaining members to one side of the reel are fixed to rods which are connectable to a mechanism for controlling the orientation of the tines.

### Detailed description of preferred embodiments of the invention

Preferred embodiments will now be described with reference to the drawings. The detailed description is not limiting the scope of the invention, which is defined only by the appended claims.

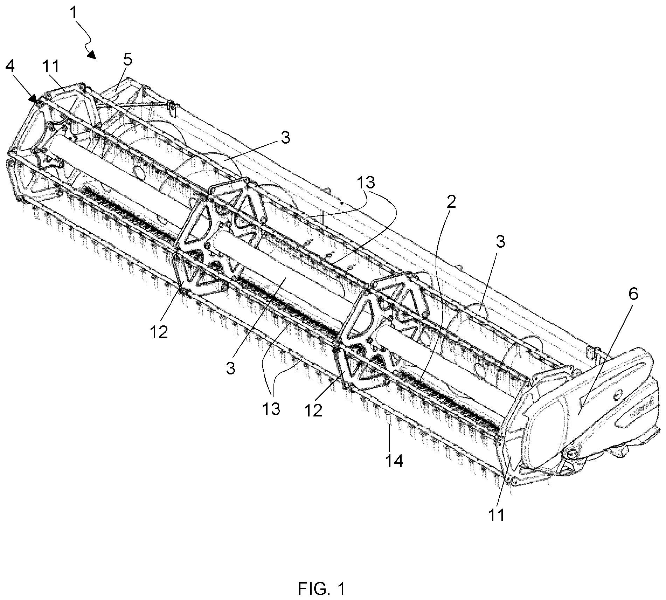

Figure 1 is a 3D view of a combine header 1 as presently known in the art. The header comprises a set of reciprocating knives 2 at the bottom, and a crop transportation auger 3 comprising oppositely wound portions for moving harvested crops towards a central area of the header where the crops enter the combine's feeder mechanism when the header is fitted onto a combine. Instead of the auger 3, a belt may be used. The reel 4 is maintained between side arms 5. Only one side arm 5 is visible in the drawing. The other side arm is obscured by a housing 6 that contains the drive mechanism for rotating the reel. The side arms 5 may be pivotable so as to hold the reel at a higher or lower position depending on the type and height of the harvester crops. The reel 4 itself comprises a rotatable tube 10 with side plates 11 attached to the tube 10 at the two extremities of the tube and intermediate plates or spiders 12 at regular distances along the length of the tube 10. The side plates 11 and the spiders 12 are attached to the tube 10, i.e. their rotation is driven by the tube. The tube 10 is rotatably coupled to the reel's drive mechanism inside the housing 6. The side plates 11 and the spiders 12 carry a number of tine bars 13 at regular intervals along their circumference, the bars 13 being parallel to the central tube 10. The bars are fitted with tines 14 for lifting up fallen crops and guiding crops towards the knives 2, as well as ensuring that the grains fall unto the auger 3 before the stalks of the crops. The tines 14 are oriented downward regardless of the angular position of the reel. This is achieved by controlling the rotational position of the tine bars 13 with respect to the side plates 11 and the spiders 12 during rotation of the reel. The tine bars may be connected to the side plates and spiders through crank arms forced to undergo a specific rotation with respect to the members 11,12 during the rotation of the reel. This may be realized by mounting an eccentrically placed plate adjacent to one of the side members, with the crank arms coupled to the eccentric plate.

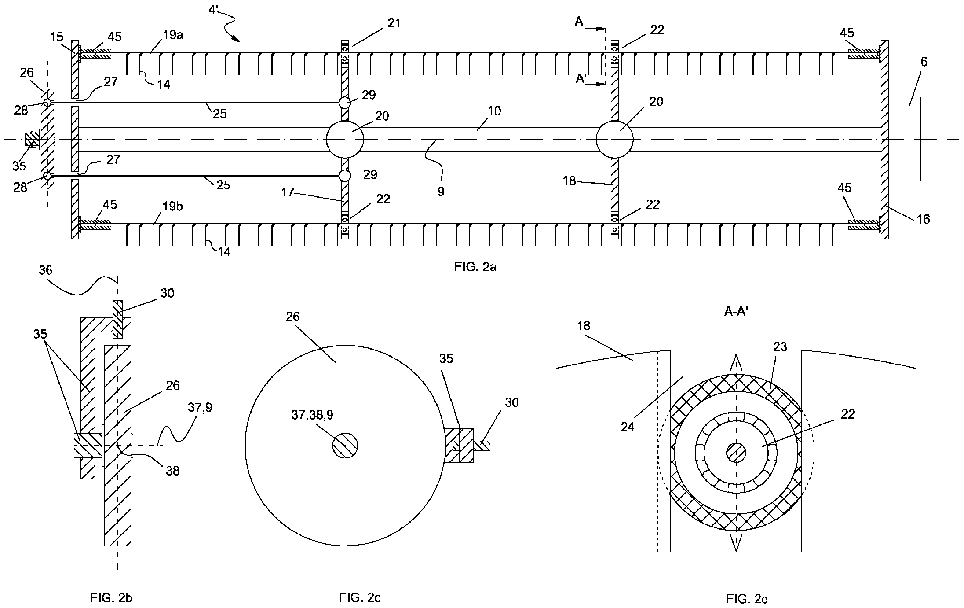

Figure 2a shows a front view of a reel 4' according to an embodiment of the invention. The central rotatable tube 10 is again visible, as are the first and second side plates 15 and 16 attached to the tube 10, i.e. the side plates are rotatable with the tube 10 as a single body, about the central rotation axis 9. Two intermediate plates 17 and 18 are mounted at regular distances between the side plates. The term 'plates' is used in this description for items 15 to 18. A more general term for these items that is also used in the claims, is 'side members' and 'intermediate members', as these items can have the shape of a plate, a spider or any other suitable alternative.

The driving mechanism for driving the rotation of the tube 10 is mounted in a housing 6 on the right-hand side of the reel and may be executed according to known techniques. Tine bars 19 are mounted at regular intervals along the circumference of the side plates 15,16 and the intermediate plates 17 and 18. Tines 14 are attached to the tine bars, in a manner known in the art. The drawing shows a section through the upper and a lower tine bars 19a and 19b in a position of the reel wherein these two bars are in the central vertical plane of the reel.

The reel is compatible with existing mechanisms for controlling the orientation of the tines, but such a mechanism is not shown in Figures 2 to 4 in order not to complicate the drawings.

Contrary to the prior art design, the intermediate plates 17 and 18 are pivotable with respect to the tube 10 about transverse pivot axes that intersect the central axis 9. In the embodiment shown in Figure 2, this feature is enabled by mounting the intermediate plates 17 and 18 on the central tube 10 through pivot connections, for example ball joints 20. The left hand-side intermediate plate 17 is furthermore coupled by a pair of coupling bars 25 to a pivotable disc 26 mounted to the left of the reel 4' and positioned essentially parallel to the intermediate plates 17 and 18. The coupling bars 25 protrude through openings 27 in the first side plate 15. The coupling bars are connected to the disc 26 and to the intermediate plate 17 by ball joints 28 and 29 respectively. The disc 26 is rotatably mounted on a support bracket 35 that is itself pivotable about a pivot axis 36 transversal to the reel 4' (preferably perpendicular to the reel 4'), so that a pivoting motion of the support bracket 35 about axis 36 induces the same pivoting motion of the disc 26 about the same axis 36. As seen in the top view in Figure 2b, the pivot axis 36 of the support bracket 35 and the rotation axis 37 of the disc 26 (for rotation of the disc with respect to the bracket 35) intersect in a point 38 that is also located on the central rotation axis 9. In the position of the intermediate plates 17,18 shown in Figure 2, the rotation axis 37 coincides with the central axis 9.

Through the ball joints 28 and 29, the pivoting of the disc 26 about axis 36 actuates the same pivoting motion of the intermediate plates 17 and 18 about pivot axes parallel to axis 36. As a general feature of the invention, the tine bars 19 are pivotably connected to the intermediate members 17 and 18, i.e. the tine bars 19 can pivot relative to the intermediate members in a plane through the central axis 9, while being prohibited to move axially relative to said intermediate members. This functionality is achieved by connecting the tine bars 19 to the intermediate plates 17 and 18 through pivot connections, preferably through pivotable bearings which allow the pivoting of the tine bars 19 as well as the rotation of the bars about their longitudinal axis, relative to the intermediate plates 17 and 18. In the embodiment of Figure 2, radial ball bearings 21 and 22 are used for the pivot connections. According to the preferred embodiment, the pivot connections such as the radial ball bearings have a radial degree of freedom with respect to the intermediate member onto which they are mounted. This is illustrated in the detailed sectioned view shown in Figure 2d. It is seen that the housing 23 of the radial ball bearing is slidably mounted in a radial groove 24 produced in the intermediate member, allowing the radial bearing 22 to move in the radial direction, as indicated by the arrows. This feature enables a fixed distance between the tine bars 19 and the central axis 9, regardless of the pivotal position of the intermediate members 17 and18.

The drive mechanism (not shown) for driving the pivoting motion of the support bracket 35 about its axis 36, and thus for driving the pivoting motion of the disc 26 is configured to control the pivotal position of the disc 26 and the intermediate plates 17 and 18 during operation of the harvester, within a given range of for example 10° on either side of the non-pivoted position shown in Figure 2a. In other words, the drive mechanism is configured to change said pivotal position and maintain it at any given value within said range, during operation of the combine harvester. The drive mechanism is powered by a power source of the combine and coupled to a rod 30 that is attached to or uniform with the bracket 35.

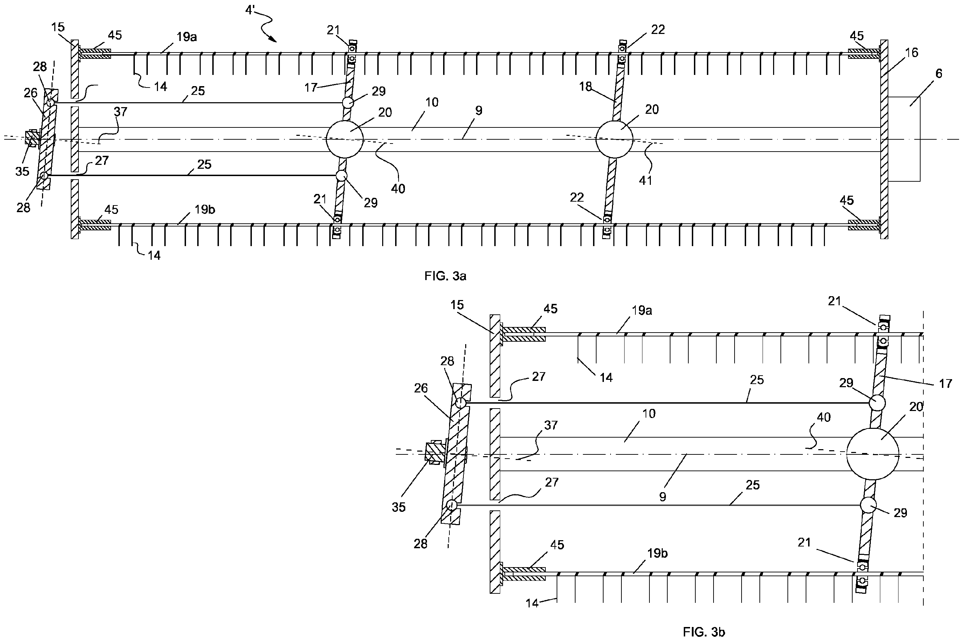

Figure 3a represents a pivoted position of the disc 26, at about 5° from the position shown in Figure 2. Through the coupling bars 25, the position of the disc 26 is transferred to the first intermediate plate 17 which in turn transfers the pivotal position to the second intermediate plate 18 through the tine bars 19, enabled by the radial bearings 21 and 22. The pivotal positioning of the intermediate plates 17 and 18 is furthermore enabled by allowing the tine bars 19 to move with respect to the side plates 15 and 16 in the axial direction of the reel 4', and in the radial direction of the side plates 15/16, while remaining parallel to the central tube 10. As is best visible in the enlarged view of the left-hand side of the reel 4' in Figure 3b, this is preferably realised by slidably engaging the ends of the tine bars 19 into retaining elements 45, allowing a reciprocating movement of the tine bar ends in the axial direction. The ends of the tine bars 19 are interacting with the retaining elements 45 in the manner of a piston interacting with a cylinder. Preferably however, the ends of the tine bars are not rotatable with respect to the retaining elements 45, which may be achieved for example by using a spline connection between the tine bars 19 and the retaining elements 45 or by using tine bars with square cross sections at least at the end portions, the tine bar ends engaging in corresponding square shaped apertures in the retaining elements 45. This fixed orientation of the tine bars 19 with respect to the retaining elements 45 may be required when the tine orientation needs to be controlled during rotation of the reel (see further in this description) .

When the reel 4' is not rotating, pivoting the intermediate plates 17 and 18 from the position of Figure 2 to the position of Figure 3 causes the upper tine bar 19a to move to the right in the axial direction of the reel. The left hand-side end of the tine bar 19a is pulled out of its retaining element 45, while the right-hand side end is pushed further into its retaining element. The opposite happens to the lower tine bar 19b.

When the reel 4' rotates about its central axis 9 while the disc 26 is held in a pivoted position, as in Figure 3, the disc 26 and the intermediate plates 17 and 18 rotate about their own rotation axes 37, 40 and 41 respectively. The slanted position of the intermediate members 17 and 18 is stationary with respect to the frame of the header during rotation of the reel. Each tine bar 19 is forced to undergo a reciprocating axial movement relative to the side plates 15 and 16, between the conditions shown for bars 19a and 19b in Figure 3.

The radial degree of freedom of the radial ball bearings 21 and 22 with respect to the intermediate plates 17 and 18 is needed also during rotation of the reel in order to allow the tine bars 19 to rotate along the same circular trajectory, as seen in a plane perpendicular to the central axis 9, regardless of the pivotal position of the intermediate plates. During rotation and with the intermediate plates 17 and 18 in a slanted position (as in Figure 3), the bearings 21 and 22 undergo a reciprocating motion in the radial direction relative to the intermediate plates : the bearings are driven radially outward when the tine bar 19 approaches the upper and lower points of the tine bar's circular trajectory, and driven back inwards as the tine bar approaches the left and right-hand side of the trajectory.

The reciprocating axial movement of the tine bars 19 combined with their rotation about the central axis 9 enables a sideways motion of the tines 14 attached to the bars 19, while the tines rotate along with the reel. Because of this sideways motion, the tines are able to lift up crops that have fallen down, even if the combine is moving in the direction of the fallen crops.

A number of alternative features may replace features of the above-described embodiment. An alternative mechanism for pivoting the intermediate members 17 and 18 can be devised by the skilled person. For example an actuator could be mounted directly on one of the pivot connections 20 for controlling its angular position. In the mechanism shown in Figures 2 and 3, the disc 26 can be replaced by a beam or any other suitably shaped object. A single coupling bar 25, or more than two coupling bars 25 may be used, in accordance with the dimensions of the reel 4' and the required forces for pivoting the intermediate plates 17 and 18. The number of intermediate plates may be higher than 2. According to preferred embodiments, the control mechanism for controlling the pivotal position of the disc 26 or the equivalent element allows the combine operator to set this pivotal position at any angle within the above-referenced range, in a continuous way and during operation of the harvester. In this way, the operator is capable of reacting to any changes in the orientation of crops with respect to the driving direction. According to an embodiment, the drive system for actuating the reel rotation is configured to change the rotational speed of the reel 4' while the pivotal position of the intermediate plates 17 and 18 is being adjusted.

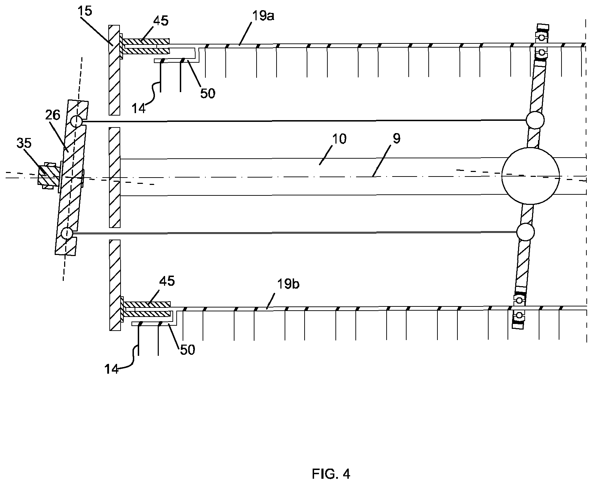

A specific embodiment is shown in Figure 4. It is seen in the embodiment of Figures 2 and 3 that the end sections of the tine bars 19 have to be free of tines 14, because these end sections need to be able to undergo the reciprocating movement with respect to the retaining elements 45. The embodiment of Figure 4 overcomes this drawback, by providing lateral brackets 50 on the end sections of the tine bars. One or more tines may then be attached to the brackets 50 while the end sections themselves remain available for moving into and out of the cylinders 45.

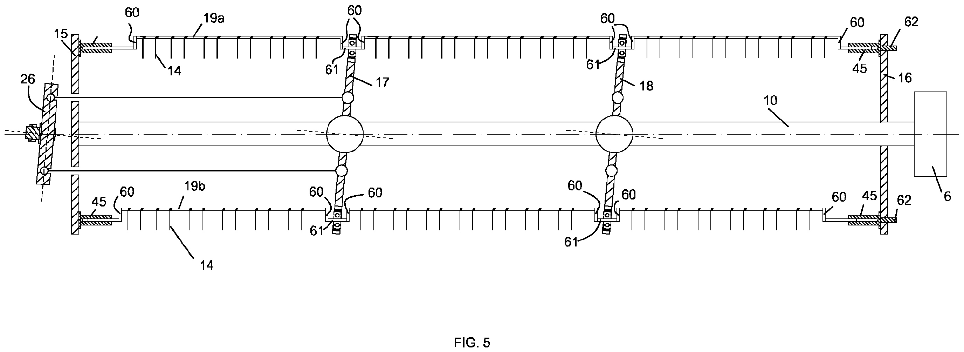

As stated, the invention is compatible with existing mechanisms for controlling the orientation of the tines 14 independently from the reel rotation, for example in order to maintain a downward orientation of the tines as the reel rotates. Depending on the type of control mechanism, particular adjustments to the inventive system may be required. As stated above, a number of these control mechanisms may require that the ends of the tine bars 19 are not rotatable about their longitudinal axis with respect to the retaining elements 45. The retaining elements 45 themselves are then coupled to a control mechanism known in the art for controlling the position of the tines. When the reel of Figures 2 and 3 is provided with tine bars provided with crank arms which are to be coupled to an eccentric disc, the retaining elements 45 on one side of the reel need to be connectable to this disc. This embodiment is illustrated in Figure 5. The tine bars 19 comprise portions which carry the tines 14 and which are connected to the side members 15/16 and the intermediate members 17/18 through crank arms 60 and axles 61. The coupling to an eccentric disc for controlling the tine orientation can be achieved by mounting the retaining elements 45 on the side of the drive mechanism 6 on rods 61 inserted through holes in the side plate 16. The rods 62 and the retaining elements 45 are acting as a single body. The rods 62 can be connected via a crank arm of the same length as the crank arms 60, to an eccentric disc (not shown). In this particular embodiment, the rotation of the tine bars 19 relative to the retaining elements 45 needs to be prohibited, for example by a spline connection as suggested above.

According to an embodiment, the pivot connections 21 and 22 (radial ball bearings in the above-described embodiments) are not radially movable relative to the intermediate plates 17 and 18. Instead, the retaining elements 45 are movable radially with respect to the side plates 15/16, for example by slidably mounting the retaining elements on radially oriented rails provided on the side plates. The pivotal positioning of the intermediate plates 17 and 18 is enabled in this case by the ability of the tine bars - through the radial degree of freedom of the retaining elements 45 - to move closer to the central axis 9 while remaining parallel thereto. During rotation of the reel 4', the tine bars 19 do not execute a circular trajectory as seen in a plane perpendicular to the central axis 9, but an elliptical trajectory, which requires the retaining elements 45 to undergo a reciprocating motion in the radial direction as the reel 4' rotates.

In the embodiment shown in the drawings, the transversal pivot axis 36 of the auxiliary member 26 and the transversal pivot axes of the intermediate members 17 and 18 are horizontal relative to the ground when the header is moving forward. This orientation can however be chosen freely within the scope of the invention. According to one embodiment, the pivot axis 36 is oriented vertically, i.e. the intermediate members 17 and 18 are pivotable about a vertical axis. This may be advantageous in a number of conditions in terms of crop type for example. The drive mechanism for pivoting the pivot axis 36 is more complex in this case.

## Claims

1. A header for a combine harvester comprising a header frame, harvesting knives (2), a rotatable reel (4') and a drive mechanism for driving the rotation of the reel, the reel comprising a central tube (10) that is rotatable about a central rotation axis (9), a first and second side member (15,16) attached respectively at the outer ends of the tube (10), a plurality of intermediate members (17,18) mounted on the tube between the side members (15,16), a plurality of tine bars (19) parallel to the tube (10) and connected to the side members (15,16) and intermediate members (17,18) along the circumference of said members, the tine bars (19) being provided with tines (14) for lifting up and guiding crops before they are cut by the knives (2), **characterised in that** :
• the intermediate members (17,18) are simultaneously pivotable about respective axes oriented transversely with respect to the central axis (9), so as to be positionable perpendicularly to the central tube (10) and in a range of slanted positions which are stationary with respect to the frame of the header during rotation of the reel,
• the tine bars (19) are pivotably connected to the intermediate members, so that the rotation of the reel (4') generates a reciprocating motion of the tine bars (19) in the axial direction of the reel when the intermediate members (17,18) are in a slanted position.

2. The header according to claim 1, wherein the ends of the tine bars (19) are slidably engaging with retaining elements (45) mounted on the side members (15,16).

3. The header according to claim 1 or 2, wherein the tine bars (19) are connected to the intermediate members (17,18) through pivot connections (21,22), which are movable in the radial direction relative to the intermediate members (17,18).

4. The header according to claim 3, wherein the pivot connections are radial bearings (21,22).

5. The header according to claim 2 or 3, wherein the pivot connections (21,22) comprise a housing (23) that is slidably mounted in a radial groove (24) provided in an intermediate member (17,18).

6. The header according to claim 2, wherein the retaining elements (45) are moveable in the radial direction with respect to the side members (15,16).

7. The header according to any one of claims 2 to 6, wherein the ends of the tine bars (19) are engaging with the retaining elements (45) through a connection that prohibits a relative rotation of the tine bars (19) with respect to the retaining elements (45), and wherein the retaining elements (45) are coupled to a mechanism for controlling the orientation of the tines (14) during rotation of the reel (4').

8. The header according to claim 7, wherein the retaining elements (45) on at least one side of the reel (4') are fixed to rods (62) inserted through holes in at least one of the side plates 15 and 16, and wherein the rods (62) are coupled to the mechanism for controlling the tine orientation.

9. The header according to any one of the preceding claims, wherein the intermediate members (17,18) are mounted on the central tube (10) through ball joints (20).

10. The header according to any one of the preceding claims, comprising an auxiliary member (26) mounted laterally with respect to the reel (4'), the auxiliary member being mounted on a support bracket (35) that is pivotable about a pivot axis (36) oriented transversely with respect to and intersecting the central rotation axis (9), the auxiliary member (26) being furthermore rotatable with respect to the support bracket (35), wherein the auxiliary member (26) is coupled to at least one of the intermediate members (17,18) so that the pivotal position of the auxiliary member (26) about its pivot axis (36) is transferred to the same pivotal position of the intermediate members about their respective pivot axes.

11. The header according to claim 10, wherein the auxiliary member (26) is connected to at least one of the intermediate members (17,18) through one or more coupling bars (25) parallel to the central axis (9) and connected through first and second ball joints (28, 29) respectively to the auxiliary member (26) at one end of each coupling bar (25) and to an intermediate member (17) at the other end.

12. The header according to claim 10 or 11, wherein intermediate members (17,18) not connected to the auxiliary member (26) are forced by the tine bars (19) to undergo said same pivoting motion when the auxiliary member (26) is pivoted about its pivot axis (36).

13. The header according to any one of claims 9 to 11, wherein the auxiliary member is a disc (26).

14. The header according to any one of the preceding claims, wherein the tine bars (19) are provided at their outer ends with a lateral bracket (50) extending in a direction parallel to the tine bar end without prohibiting the reciprocating motion of the tine bar, the lateral brackets (50) being suitable for receiving one or more tines (14) attached to these lateral brackets.

15. A combine harvester equipped with a header according to any one of the preceding claims.

## Patentansprüche

1. Vorsatz für einen Mähdrescher mit einem Vorsatzrahmen, Erntemessern (2), einer drehbaren Haspel (4') und einem Antriebsmechanismus zum Antreiben der Drehung der Haspel, wobei die Haspel ein zentrales Rohr (10) aufweist, das um eine zentrale Schwenkachse (9) schwenkbar ist, ein erstes und zweites Seitenelement (15, 16), die entsprechend an den äußeren Enden des Rohres (10) angebracht sind, eine Mehrzahl von Zwischenelementen (17, 18), die an dem Rohr zwischen den Seitenelementen (15, 16) angebracht sind, eine Mehrzahl von Zinkenstangen (19), die parallel zu dem Rohr (10) verlaufen und mit den Seitenelementen (15, 16) und den Zwischenelementen (17, 18) entlang des Umfangs der Zwischenelemente verbunden sind, wobei die Zinkenstangen (19) mit Zinken (14) versehen sind, um das Getreide anzuheben und zu führen, bevor es von den Messern (2) abgetrennt wird,
**dadurch gekennzeichnet, dass**:
• die Zwischenelemente (17, 18) simultan um entsprechende Achsen schwenkbar sind, die quer bezüglich der zentralen Achse (9) ausgerichtet sind, so dass sie senkrecht zu dem Zentralrohr (10) und in einer Bandbreite von Schräglagen positionierbar sind, die stationär bezüglich des Vorsatzrahmens während einer Drehung der Haspel sind,
• die Zinkenstangen (19) schwenkbar mit den Zwischenelementen verbunden sind, sodass die Drehung der Haspel (4') eine hin- und hergehende Bewegung der Zinkenstangen (19) in axialer Richtung der Haspel erzeugt, wenn sich die Zwischenelemente (17, 18) in einer Schräglage befinden.

2. Vorsatz nach Anspruch 1, wobei die Enden der Zinkenstangen (19) verschiebbar mit Halteelementen (45) in Eingriff stehen, die an den Seitenelementen (15, 16) angebracht sind.

3. Vorsatz nach Anspruch 1 oder 2, wobei die Zinkenstangen (19) mit den Zwischenelementen (17, 18) durch Schwenkverbindungen (21, 22) verbunden sind, die in radialer Richtung relativ zu den Zwischenelementen (17, 18) bewegbar sind.

4. Vorsatz nach Anspruch 3, wobei die Schwenkverbindungen Radiallager (21, 22) sind.

5. Vorsatz nach Anspruch 2 oder 3, wobei die Schwenkverbindungen (21, 22) ein Gehäuse (23) aufweisen, das verschiebbar in einer radialen Aussparung (24) in einem Zwischenelement (17, 18) vorgesehen ist.

6. Vorsatz nach Anspruch 2, wobei die Halteelemente (45) in radialer Richtung bezüglich der Seitenelemente (15, 16) bewegbar sind.

7. Vorsatz nach einem der Ansprüche 2 bis 6, wobei die Enden der Zinkenstangen (19) mit den Halteelementen (45) durch eine Verbindung in Eingriff stehen, die eine relative Drehung der Zinkenstangen (19) bezüglich der Halteelemente (45) verhindert, und wobei die Halteelemente (45) an einen Mechanismus zur Steuerung der Ausrichtung der Zinken (14) während der Drehung der Haspel (4') gekoppelt sind.

8. Vorsatz nach Anspruch 7, wobei die Halteelemente (45) an mindestens einer Seite der Haspel (4') an Stangen (62) angebracht sind, die durch Löcher in mindestens einer der Seitenplatten 15 und 16 eingesetzt sind, und wobei die Stangen (62) an den Mechanismus zur Steuerung der Zinkenausrichtung gekoppelt sind.

9. Vorsatz nach einem der vorangehenden Ansprüche, wobei die Zwischenelemente (17, 18) an dem Zentralrohr (10) durch Kugelgelenke (20) angebracht sind.

10. Vorsatz nach einem der vorangehenden Ansprüche, der ein Hilfselement (26) aufweist, das seitlich bezüglich der Haspel (4') angebracht ist, wobei das Hilfselement an einer Stützvorrichtung (35) angebracht ist, die um eine Schwenkachse (36) schwenkbar ist, die quer bezüglich der zentralen Drehachse (9) ausgerichtet ist und diese schneidet, wobei das Hilfselement (26) weiterhin schwenkbar bezüglich der Stützvorrichtung (35) ist, wobei das Hilfselement (26) mit mindestens einem Zwischenelement (17, 18) gekoppelt ist, sodass die Schwenkposition des Hilfselements (26) um seine Schwenkachse (36) an dieselbe Schwenkposition der Zwischenelemente um deren entsprechende Schwenkachse übertragen wird.

11. Vorsatz nach Anspruch 10, wobei das Hilfselement (26) mit mindestens einem Zwischenelement (17, 18) durch eine oder mehrere Kuppelstangen (25) parallel zur zentralen Achse (9) verbunden ist und durch erste und zweite Kugelgelenke (28, 29) bezüglich des Hilfselements (26) an einem Ende von je einer Kuppelstange (25) und an einem Zwischenelement (17) an dem anderen Ende verbunden ist.

12. Vorsatz nach Anspruch 10 oder 11, wobei die Zwischenelemente (17, 18), die nicht mit dem Hilfselement (26) verbunden sind, von den Zinkenstangen (19) gezwungen werden, dieselbe Schwenkbewegung zu durchlaufen, wenn das Hilfselement (26) um seine Schwenkachse (36) geschwenkt wird.

13. Vorsatz nach einem der Ansprüche 9 bis 11, wobei das Hilfselement eine Scheibe (26) ist.

14. Vorsatz nach einem der vorangehenden Ansprüche, wobei die Zinkenstangen (19) an ihren äußeren Enden mit einer seitlichen Leiste (50) versehen sind, die sich in einer Richtung parallel zu dem Zinkenstangenende erstreckt ohne die hin- und hergehende Bewegung der Zinkenstange zu verhindern, wobei die seitlichen Leisten (50) dazu geeignet sind, um einen oder mehrere Zinken (14) aufzunehmen, die an den seitlichen Leisten angebracht sind.

15. Mähdrescher, der mit einem Vorsatz nach einem der vorangehenden Ansprüche ausgestattet ist.

## Revendications

1. Tête pour moissonneuse-batteuse comprenant une structure de tête, des couteaux de récolte (2), une bobine rotative (4') et un mécanisme d'entraînement pour entraîner la rotation de la bobine, la bobine comprenant un tube central (10) qui peut tourner autour d'un axe de rotation central (9), un premier et un deuxième élément latéral (15, 16) attachés respectivement aux extrémités du tube (10), une pluralité d'éléments intermédiaires (17, 18) montés sur le tube entre les éléments latéraux (15, 16), une pluralité de barres porte-dents (19) parallèles au tube (10) et connectées aux éléments latéraux (15, 16) et aux éléments intermédiaires (17, 18) le long de la circonférence desdits éléments, les barres porte-dents (19) étant dotées de dents (14) pour lever et guider les récoltes avant qu'elles ne soient coupées par les couteaux (2)
**caractérisée en ce que** :
• les éléments intermédiaires (17, 18) peuvent tourner simultanément autour des axes respectifs orientés transversalement par rapport à l'axe central (9), de manière à pouvoir être positionnés perpendiculairement au tube central (10) et dans une série de positions inclinées fixes par rapport au cadre de la tête pendant la rotation de la bobine,
• les barres porte-dents (19) sont connectées de manière pivotable aux éléments intermédiaires, de manière à ce que la rotation de la bobine (4') entraîne un mouvement réciproque des barres porte-dents (19) dans le sens axial de la bobine lorsque les éléments intermédiaires (17, 18) sont dans une position inclinée.

2. Tête selon la revendication 1, dans laquelle les extrémités des barres porte-dents (19) sont en prise de manière coulissante avec des éléments de retenue (45) montés sur les éléments latéraux (15, 16).

3. Tête selon la revendication 1 ou 2, dans laquelle les barres porte-dents (19) sont connectées aux éléments intermédiaires (17, 18) par le biais de connexions pivotantes (21, 22), qui peuvent bouger dans le sens radial par rapport aux éléments intermédiaires (17, 18).

4. Tête selon la revendication 3, dans laquelle les connexions pivotantes sont des paliers radiaux (21, 22).

5. Tête selon la revendication 2 ou 3, dans laquelle les connexions pivotantes (21, 22) comprennent un boîtier (23) monté de manière coulissante dans une rainure radiale (24) ménagée dans un élément intermédiaire (17, 18).

6. Tête selon la revendication 2, dans laquelle les éléments de retenue (45) peuvent être déplacés dans le sens radial par rapport aux éléments latéraux (15, 16).

7. Tête selon l'une quelconque des revendications 2 à 6, dans laquelle les extrémités des barres porte-dents (19) sont en prise avec les éléments de retenue (45) par le biais d'une connexion qui empêche une rotation relative des barres porte-dents (19) par rapport aux éléments de retenue (45), et dans laquelle les éléments de retenue (45) sont couplés à un mécanisme de commande de l'orientation des dents (14) pendant la rotation de la bobine (4').

8. Tête selon la revendication 7, dans laquelle les éléments de retenue (45) sur au moins un côté de la bobine (4') sont fixés à des tiges (62) insérées dans des trous dans au moins une des plaques latérales (15 et 16), et dans laquelle les tiges (62) sont couplées au mécanisme de commande de l'orientation des dents.

9. Tête selon l'une quelconque des revendications précédentes, dans laquelle les éléments intermédiaires (17,18) sont montés sur le tube central (10) par le biais de joints à rotule (20).

10. Tête selon l'une quelconque des revendications précédentes, comprenant un élément auxiliaire (26) monté latéralement par rapport à la bobine (4'), l'élément auxiliaire étant monté sur un étrier de support (35) pouvant tourner autour d'un axe de pivotement (36) orienté transversalement par rapport à et croisant l'axe de rotation central (9), l'élément auxiliaire (26) pouvant en outre tourner par rapport à l'étrier de support (35), dans laquelle l'élément auxiliaire (26) est couplé à au moins un des éléments intermédiaires (17, 18) de manière à ce que la position pivot de l'élément auxiliaire (26) autour de son axe de pivotement (36) soit transférée dans la même position pivot des éléments intermédiaires autour de leurs axes de pivotement respectifs.

11. Tête selon la revendication 10, dans laquelle l'élément auxiliaire (26) est connecté à au moins un des éléments intermédiaires (17, 18) par le biais d'une ou de plusieurs barres de couplage (25) parallèles à l'axe central (9) et connectées par le biais des premier et deuxième joints à rotule (28, 29) par rapport à l'élément auxiliaire (26) à une extrémité de chaque barre de couplage (25) et à un élément intermédiaire (17) à l'autre extrémité.

12. Tête selon la revendication 10 ou 11, dans laquelle les éléments intermédiaires (17, 18) qui ne sont pas connectés à l'élément auxiliaire (26) sont contraints par les barres porte-dents (19) de subir ledit même mouvement de rotation lorsque l'élément auxiliaire (26) tourne autour de son axe de pivotement (36).

13. Tête selon l'une quelconque des revendications 9 à 11, dans laquelle l'élément auxiliaire est un disque (26).

14. Tête selon l'une quelconque des revendications précédentes, dans laquelle les barres porte-dents (19) sont dotées à leur extrémité d'un support latéral (50) s'étendant dans un sens parallèle à l'extrémité de la barre porte-dents sans empêcher le mouvement réciproque de la barre porte-dents, les supports latéraux (50) étant adaptés pour recevoir une ou plusieurs dents (14) attachées à ces supports latéraux.

15. Moissonneuse-batteuse équipée d'une tête selon l'une quelconque des revendications précédentes.
